## Europäisches Patentamt
## European Patent Office
## Office européen des brevets

(11) Veröffentlichungsnummer: **0 147 486**
**B1**

(12) # EUROPÄISCHE PATENTSCHRIFT

(45) Veröffentlichungstag der Patentschrift:
14.01.87

(51) Int. Cl.⁴: **B 01 D 53/14,** B 01 D 5/00

(21) Anmeldenummer: **83201687.7**

(22) Anmeldetag: **29.11.83**

(54) Verfahren zum Entschwefeln von Gasen mit einer aminhaltigen Waschlösung.

(43) Veröffentlichungstag der Anmeldung:
10.07.85 Patentblatt 85/28

(45) Bekanntmachung des Hinweises auf die Patenterteilung:
14.01.87 Patentblatt 87/3

(84) Benannte Vertragsstaaten:
AT BE DE FR GB IT NL SE

(56) Entgegenhaltungen:
DE-A-1 942 518
DE-A-2 141 878
DE-B-1 025 832
FR-A-823 059

(73) Patentinhaber: METALLGESELLSCHAFT AG,
Reuterweg 14 Postfach 3724, D-6000 Frankfurt/M.1
(DE)

(72) Erfinder: Doerges, Alexander, Dr., Ziegenhainer
Strasse 95, D-6000 Frankfurt am Main 50 (DE)
Erfinder: Schlauer, Johann, Zwischenstrasse 11,
D-6000 Frankfurt am Main 70 (DE)
Erfinder: Kriebel, Manfred, Dr., Tiroler Strasse 61,
D-6000 Frankfurt am Main 70 (DE)
Erfinder: Hude, Anton, Dr., Siesmayerstrasse 5,
D-6000 Frankfurt am Main 1 (DE)

(74) Vertreter: Rieger, Harald, Dr., Reuterweg 14,
D-6000 Frankfurt am Main (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

## Beschreibung

Die Erfindung betrifft ein Verfahren zum Entschwefeln von Gas, das als Schwefelverbindungen $H_2S$ und/oder COS enthält, mit einer mindestens ein Amin enthaltenden Waschlösung, die in der Waschzone im Gegenstrom zum aufwärts strömenden Gas geführt wird.

Aus der DE-OS 30 00 250 ist ein solches Entschwefelungsverfahren bekannt, wobei die Waschlösung im Kreislauf zwischen der Waschzone und einer Regenerationszone geführt wird. Für Synthesezwecke, z.B. für die Synthese von Methanol, benötigt man Gase, die oft nur weniger als 0,1 mg Schwefel pro m³ enthalten dürfen, um die empfindlichen Katalysatoren zu schützen. (Hier wie im folgenden Text bezieht sich die Angabe "m³" bei Gasen auf den Zustand bei 0ºC und 1,013 bar.) Dabei ist es schwierig, solche Reinheitsgrade beim bekannten Verfahren zu erreichen, weil die Waschlösung sehr weitgehend regeneriert sein muß und diese Regenerierung viel Aufwand an Energie und an Investitionskosten für Apparate erfordert.

Überraschend wurde nunmehr ein einfaches Verfahren gefunden, wie dieser Aufwand vermindert und trotzdem die erforderliche Entschwefelung sicher erreicht werden kann. Erfindungsgemäß geschieht dies dadurch, daß das zu entschwefelnde Gas beim Eintritt in die Waschzone eine Eintrittstemperatur im Bereich von 25 bis 100°C aufweist, daß man das aus der Waschzone kommende Gas indirekt auf eine Temperatur kühlt, die mindestens 20°C niedriger liegt als die Eintrittstemperatur und die nicht tiefer als 5°C ist, daß man durch die indirekte Kühlung ein Kondensat erzeugt, das mindestens ein sekundäres Amin enthält und dieses Kondensat als Waschlösung durch die Waschzone leitet, wobei das aus der Waschzone kommende Kondensat pro Mol $H_2S$ plus COS im zu entschwefelnden Gas mindestens 10 Mol sekundäres Amin enthält. Wichtig ist hierbei, daß man auf einen Waschlösungs-Kreislauf zwischen der Waschzone und einer Regenerationszone verzichtet und in der Waschzone keine regenerierte Waschlösung verwendet.

Das Verfahren eignet sich besonders zur Feinentschwefelung, wobei eine Grobentschwefelung mit im Kreislauf geführter Waschlösung vorausgegangen sein kann. Das der Feinentschwefelung aufzugebende Gas enthält dann, wasserfrei gerechnet, pro m³ höchstens 5 mg $H_2S$ plus COS und vorzugsweise höchstens 2 mg $H_2S$ plus COS. Der Druck in der Waschzone der Feinentschwefelung kann beliebig gewählt werden und etwa im Bereich von 0,8 bis 100 bar liegen. Vorzugsweise liegt die Temperatur des in die Waschzone der Feinentschwefelung eintretenden Gases bei 50 bis 80°C.

Beim erfindungsgemäßen Verfahren wird die in der Waschzone verwendete Waschlösung überwiegend oder vollständig durch Kondensation im Gas enthaltener Dämpfe erzeugt. Wenn das Gas zuvor eine Wäsche mit einer Waschlösung, bestehend aus einem sekundären Amin und einem Lösungsmittel, passiert hat, enthält das Gas gewisse Anteile von verdampftem Lösungsmittel und Amin. Falls erforderlich, kann man diesem teilweise entschwefelten Gas vor Eintritt in die Waschzone der Feinentschwefelung weiteres sekundäres Amin zugeben, das dann dampfförmig mitgenommen wird. Es ist aber auch möglich, den erforderlichen Amingehalt durch Aminzugabe oberhalb der Waschzone einzustellen.

Da in dem durch die Waschzone fließenden Kondensat hauptsächlich die sekundären Amine zum Entschwefeln wirksam sind, darf dieses Kondensat auch beträchtliche Mengen an Wasser enthalten. Der Wassergehalt im gebrauchten Kondensat, das die Waschzone an deren unterem Ende verläßt, soll jedoch höchstens 40 Mol% betragen. Weitere geeignete Lösungsmittel, die in das Kondensat übergehen, sind einer oder mehrere der Alkohole Methanol, Ethanol oder Isopropanol. Insbesondere wenn COS aus dem Gas zu entfernen ist, ist ein wasserarmes Kondensat erwünscht, weil zuviel Wasser den Übergang insbesondere von COS, aber auch von $H_2S$, in das Kondensat beeinträchtigt. Wurden die Gase vor der erfindungsgemäßen Feinentschwefelung mit einer Waschlösung, bestehend aus dem gleichen Lösungsmittel und dem gleichen Amin, vorentschwefelt, ist üblicherweise der Gehalt des Gases an Wasserdampf nur gering, so daß die Feinentschwefelung optimal verlaufen kann.

Die Kombination von Vorentschwefelung und Feinentschwefelung mit den gleichen wirksamen Bestandteilen in der Waschlösung der Vorentschwefelung und im Kondensat hat den besonderen Vorteil, daß man mit der Temperatur der Waschlösung den Gehalt an Lösungsmittel und Amin in den Gasen aus der Vorentschwefelung regeln und somit auch den Anfall an Gaskondensat nach indirekter Kühlung und den Amingehalt im Kondensat einstellen kann. Ferner kann man das abgetrennte schwefelhaltige Gaskondensat aus der Waschzone der Feinentschwefelung der Waschlösung der Vorentschwefelung hinzufügen. Auch die Entfernung von Lösungsmittel und Amindämpfen aus dem entschwefelten Gas braucht nur einmal nach der Feinentschwefelung und nicht auch noch nach der Vorentschwefelung vorgenommen zu werden, so daß der Aufwand hierfür verringert wird.

Die erfindungsgemäße Feinentschwefelung kann besonders günstig betrieben werden, wenn die Gase soviel Amin enthalten, daß im Gaskondensat vorzugsweise mindestens 100 Mol sekundäres Amin pro Mol $H_2S$ plus COS im zu entschwefelnden Gas enthalten sind. Der mindestens erforderliche Amingehalt in der Waschlösung der Feinentschwefelung hängt von Druck und Temperatur in der Waschzone ab. Je geringer der zulässige Schwefelrestgehalt im entschwefelten Gas ist, umso größer muß der Amingehalt im Kondensat sein. Wenn z.B. im gereinigten Gas ein Restgehalt von weniger als 0,1 mg Schwefel pro m³ verlangt wird, muß man für diese Feinentschwefelung pro Mol $H_2S$ plus COS in dem der Waschzone zugeführtem Gas mindestens 100 Mol sekundäres Amin in dem aus der Waschzone abfließenden Kondensat haben. Es ist einleuchtend, daß dadurch auch die Gehalte an $H_2S$ und COS begrenzt werden, die in dem der Feinentschwefelung aufzugebenden Gas enthalten sein dürfen. Bei $CO_2$-reichen Gasen · muß das Molverhältnis Amin : ($H_2S$ . COS) größer sein als bei $CO_2$-armen Gasen.

Als sekundäres Amin verwendet man für die erfindungsgemäße Feinentschwefelung bevorzugt mindestens eine der Verbindungen
N-ethylethanamin,
N-(1-Methylethyl)-2-propanamin,
N-Methyl-2-propanamin,
N-Ethyl-2-propanamin,
N-Propyl-l,propanamin,
N-Methyl-1-butanamin,
N,2-Dimethyl-1-propanamin und
N-Methyl-2-butanamin.

Bei diesen Aminen ist es ein zusätzlicher Vorteil, daß sie die Schwefelverbindungen selektiv trotz Gegenwart von $CO_2$ im Gas binden. Bei COS-haltigen Gasen werden Diethylamin, Dipropylamin oder die Methyl-Butylamine bevorzugt. Wenn $H_2S$ selektiv entfernt werden soll, sind Diisopropylamin und Ethylisopropylamin besonders geeignet. Dabei können auch Mischungen der verschiedenen Amine eingesetzt werden.

Durch das Verfahren der Erfindung kann man Gase mit geringen Gehalten an $H_2S$ und/oder COS ohne großen Aufwand sehr weitgehend entschwefeln und hat dabei folgende Vorteile:

1. Die Vorentschwefelung der Gase z.B. durch eine Kreislaufwäsche braucht nicht bis zum verlangten Restgehalt von z.5. 0,1 mg Schwefel pro m³ getrieben zu werden, sondern es genügt ein höherer Restgehalt von z.B. 2 mg Schwefel pro m³. M2n spart dadurch in der Vorentschwefelung erhebliche Aufwendungen beim Regenerieren der Waschlösung, auch die Kühlwassermenge kann kleiner gehalten werden, dazu kann man eine Reihe von Apparaten kleiner dimensionieren.

2. Die Feinentschwefelung kann selektiv durchgeführt werden, dadurch bleibt die Zusammensetzung der Gase erhalten.

3. Die Feinentschwefelung ist sehr wirksam, so daß das die Waschzone verlassende Reingas nur noch 1/10 oder einen viel niedrigeren Anteil des COS- und $H_2S$-Gehalts des in die Waschzone eintretenden Gases enthält. Falls der Druck in der Waschzone 1 bis 5 bar beträgt, ist leicht eine Verbesserung um einen Faktor 100 und mehr zu erreichen.

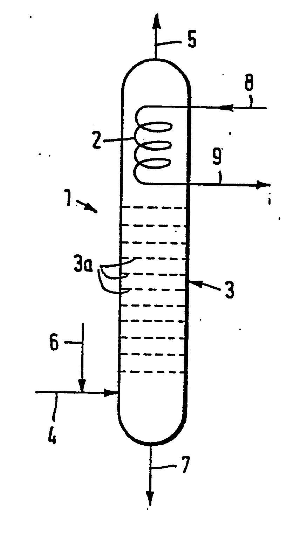

In der Zeichnung ist die Verfahrensführung der Feinentschwefelung schematisch dargestellt.

Eine Kolonne 1 weist im oberen Teil einen indirekten Kühler oder Dephlegmator 2 auf, darunter liegt die Waschzone 3, die z.B. mit Stoffaustauschböden 3a ausgestattet ist. Bereits vorentschwefeltes Gas tritt durch die Leitung 4 in die Kolonne 1 ein. Sollte der Gehalt an Lösungsmittel und/oder sekundärem Amin im zu entschwefelnden Gas nicht ausreichen, werden diese Stoffe durch die Leitung 6 zugegeben. Das dämpfehaltige Gas tritt beim Aufsteigen durch die Waschzone 3 mit von oben herabfließendem Kondensat in Stoffaustausch. Das Kondensat wird im Kühler 2 gebildet und läuft nach unten durch die Waschzone 3. Der Kühler 2 kann z.B. von Wasser als Kühlmittel durchströmt sein, das durch die Leitung S zuläuft und durch die Leitung 9 abgezogen wird.

Gereinigtes Gas verläßt die Kolonne 1 durch die Leitung 5 und gebrauchtes Kondensat läuft durch die Leitung 7 ab.

Abweichend von der Zeichnung kann man den Kühler 2 auch als separates Aggregat ausbilden, das Kondensat in einen Vorratsbehälter leiten und es von da auf den Kopf der Waschzone 3 pumpen.

## Beispiel

In einer der Zeichnung entsprechenden Versuchsanlage wird durch die Leitung 4 ein bereits vorentschwefeltes Gas, das eine Temperatur von 60° C und einen Druck von 50 bar aufweist, in die Kolonne 1 eingeleitet. Pro m³ enthält das Gas 1,5 mg Schwefel als COS und 0,5 mg Schwefel als $H_2S$, 0,7 gMol Methanol und 0,02 gMol Diethylamin. 3 Vol.% des praktisch wasserfreien Gases bestehen aus $CO_2$, die übrigen Komponenten sind Wasserstoff und Kohlenmonoxid. Pro Mol $H_2S$ plus COS enthält das Gas in der Leitung 4 also 320 Mol Diethylamin. Am Kühler 2 werden bei einer Kühlwassertemperatur in der Leitung 8 von 15° C pro m³ Gas in der Leitung 4 0,56 gMol Methanol und 0,015 gMol Diethylamin kondensiert. Dieses Kondensat läuft über die Stoffaustauschböden der Waschzone 3 nach unten und enthält im Ablauf 7 bei 56° C 0,0603 millimol $H_2S$ plus COS an das Amin gebunden, das bedeutet ein Verhältnis von 240 Mol Amin im Kondensat pro Moi $H_2S$ plus COS im Gas der Leitung C. Das Reingas in der Leitung 5 enthält pro m³ noch 0,05 mg Schwefel als $H_2S$ und 0,02 mg Schwefel als COS, es weist eine Temperatur von 25° C auf. In der Waschzone 3 hat das Kondensat nur 0,025 Vol.% $CO_2$ aufgenommen, so daß der $CO_2$-Gehalt im Reingas noch 2,975 Vol.% beträgt und demnach kaum verringert ist.

## Patentansprüche

1) Verfahren zum Entschwefeln von Gas, das als Schwefelverbindungen $H_2S$ und/oder COS

enthält, mit einer mindestens ein Amin enthaltenden Waschlösung, die in der Waschzone im Gegenstrom zum aufwärts strömenden Gas geführt wird, dadurch gekennzeichnet, daß das zu entschwefelnde Gas beim Eintritt in die Waschzone eine Eintrittstemperatur im Bereich von 25 bis 100°C aufweist, daß man das aus der Waschzone kommende Gas indirekt auf eine Temperatur kühlt, die mindestens 20°C niedriger liegt als die Eintrittstemperatur und die nicht tiefer als 5°C ist, daß man durch die indirekte Kühlung ein Kondensat erzeugt, das mindestens ein sekundäres Amin enthält und dieses Kondensat als Waschlösung durch die Waschzone leitet, wobei das aus der Waschzone kommende Kondensat pro Mol $H_2S$ plus COS im zu entschwefelnden Gas mindestens 10 Mol sekundäres Amin enthält.

2) Verfahren nach Anspruch 1, dadurch gekennzeichnet, daß das zu entschwefelnde Gas, wasserfrei gerechnet, pro m³ höchstens 5 mg $H_2S$ plus COS enthält.

3) Verfahren nach Anspruch 1 oder 2, dadurch gekennzeichnet, daß das aus der Waschzone kommende Kondensat pro Mol $H_2S$ plus COS im zu entschwefelnden Gas mindestens 100 Mol sekundäres Amin enthält.

4) Verfahren nach Anspruch 1 oder einem der folgenden, dadurch gekennzeichnet, daß das zu entschwefelnde Gas mindestens ein organisches Lösungsmittel dampfförmig enthält, das durch die indirekte Kühlung kondensiert, wobei das sekundäre Amin im Kondensat gelöst wird.

5) Verfahren nach Anspruch 4, dadurch gekennzeichnet, daß man als organisches Lösungsmittel einen oder mehrere der Alkohole Methanol, Ethanol und Isopropanol verwendet.

6) Verfahren nach Anspruch 1 oder einem der folgenden, dadurch gekennzeichnet, daß als sekundäres Amin mindestens eine der Verbindungen
N-ethylethanamin,
N-(1-Methylethyl)-2-propanamin,
N-Methyl-2-propanamin,
N-Ethyl-2-propanamin,
N-Propyl-1-propanamin,
N-Methyl-1-butanamin,
N,2-Dimethyl-1-propanamin und
N-Methyl-2-butanamin
dient.

7) Verfahren nach Anspruch 1 oder einem der folgenden, dadurch gekennzeichnet, daß das sekundäre Amin der Waschlösung im zu entschwefelnden Gas dampfförmig enthalten ist.

## Claims

1. A process of desulfurizing a gas which contains sulfur compounds consisting of $H_2S$ and/or COS with an absorbent solution which contains at least one amine and is conducted in a scrubbing zone in a counter-current to the rising gas stream, characterized in that the gas to be desulfurized is at an entrance temperature in the range of 25 to 100°C as it enters the scrubbing zone, the gas leaving the scrubbing zone is indirectly cooled to a temperature which is lower by at least 20°C than the entrance temperature and is not lower than 5°C, the indirect cooling results in a condensate which contains at least one secondary amine, said condensate is conducted through the scrubbing zone as an absorbent solution, and the condensate leaving the scrubbing zone contains at least lo moles secondary amine per mole of $H_2S$ and COS in the gas to be desulfurized.

2. A process according to claim 1, characterized in that the gas to be desulfurized contains on an anhydrous basis $H_2S$ plus COS not in excess of 5 mg per cubic meter.

3. A process according to claim 1 or 2, characteizred in that the condensate leaving the scrubbing zone contains at least 100 moles secondary amine per mole $H_2S$ Plus COS in the gas to be desulfurized.

4. A process according to claim 1 or any of the following claims, characterized in that the gas to be desulfurized contains a vapor of at least one organic solvent, which is condensed by the indirect cooling, and the secondary amine is dissolved in the condensate.

5. A process according to claim 4, characterized in that one or more of the alcohols methanol, ethanol and isopropanol are used as the organic solvent.

6. A process according to claim 1 or any of the following claims, characteri zed in that at least one of the compounds
N-ethylethanamine
N-(1-methylethyl)-2-propanamine
N-methyl-2-propanamine
N-ethyl-2-propanamine
N-propyl-1-lpropanamine
N-methyl-1-butanamine
N,2-dimethyl-1-propanamine and
N-methyl-2-butanamine
is used as a secondary amine.

7. A process according to claim 1 or any of the following claims, characterized in that said secondary amine used in the absorbent solution is contained as a vapor in the gas to be desulfurized.

## Revendications

1. Procédé de désulfuration de gaz qui contiennent $H_2S$ et/ou COS comme composés soufrés, par une solution de lavage contenant au moins une amine, qui est envoyée dans la zone de lavage à contre-courant du gaz ascendant, caractérisé en ce que le gaz à désulfurer présente, lors de l'entrée dans la zone de lavaqe, une température d'entrée comprise entre 25 et 100°C, on refroidit indirectement le gaz arrivant de la zone de lavage à une température qui est inférieure d'au moins 20°C à la température d'entrée et qui n'est pas inférieure à 5°C, on produit, par le refroidissement indirect, un produit condensé qui contient au moins une amine secondaire et on envoie ce produit condensé à titre de solution de lavage dans la zone de lavage, le produit condensé provenant de la zone de lavage contenant, par mole d'$H_2S$ plus COS du gaz à désulfurer, au moins 10 moles d'amine secondaire.

2. Procédé suivant la revendication 1, caractérisé en ce que le gaz à désulfurer contient, exprimé en produit anhydre, 5 mg d'$H_2S$ plus COS au plus par m³.

3. Procédé suivant la revendication 1 ou 2, caractérisé en ce que le produit condensé venant de la zone de lavage contient, par mole d'$H_2S$ plus COS dans le gaz à désulfurer, au moins 100 moles d'amine secondaire.

4. Procédé suivant la revendication 1 ou l'une des suivantes, caractérisé en ce que le gaz à désulfurer contient au moins un solvant organique sous forme de vapeur, qui est condensé par le refroidissement indirect, l'amine secondaire étant dissoute dans le produit condensé.

5. Procédé suivant la revendication 4, caractérisé en ce qu'on utilise comme solvant organique un ou plusieurs des alcools que sont le méthanol, l'éthanol et l'isopropanol.

6. Procédé suivant la revendication 1 ou l'une des suivantes, caractérisé en ce qu'on se sert comme amine secondaire d'au moins l'un des composes

N-éthylétanamine,
N-(1-méthyléthyl)-2-propanamine,
N-méthyl-2-propanamine,
N-éthyl-2-propanamine,
N-propyl-1-propanamine,
N-méthyl-1-butanamine,
N,2-diméthyl-1-propanamine et
N-méthyl-2-butanamine.

7. Procédé suivant la revendication 1 ou l'une des suivantes, caractérisé en ce que l'amine secondaire de la solution de lavage est contenue à l'état de vapeur dans le gaz à désulfurer.